# EUROPÄISCHE PATENTSCHRIFT

(11) **EP 2 195 557 B1**
(45) Veröffentlichungstag und Bekanntmachung des Hinweises auf die Patenterteilung: **30.11.2011**
(21) Anmeldenummer: 08803056.4
(22) Anmeldetag: 15.08.2008
(51) Int. Cl.: F16H 47/04, F16H 3/093

(54) **LEISTUNGSVERZWEIGUNGSGETRIEBE**
POWER SPLIT TRANSMISSION
TRANSMISSION À RÉPARTITION DE PUISSANCE

(30) Priorität: 02.10.2007 DE 102007047194
(43) Veröffentlichungstag der Anmeldung: 16.06.2010
(73) Patentinhaber: ZF Friedrichshafen AG, 88038 Friedrichshafen (DE)
(72) Erfinder: LEGNER, Jürgen, 88048 Friedrichshafen (DE)
(86) Internationale Anmeldenummer: PCT/EP2008/060764
(87) Internationale Veröffentlichungsnummer: WO 2009/047042

(56) Entgegenhaltungen:
- US-A- 3 204 486
- US-A- 3 212 358
- US-A- 4 121 479
- US-A- 5 868 640

## Beschreibung

Die Erfindung bezieht sich auf ein Leistungsverzweigungsgetriebe nach der im Oberbegriff von Anspruch 1 näher definierten Art.

Gattungsgemäße Leistungsverzweigungsgetriebe weisen einen hydrostatischen Leistungszweig und einen mechanischen Leistungszweig auf, welche über ein Summierungsgetriebe aufsummiert werden, um einen Abtrieb anzutreiben.

Die DE 28 54 375 A1 offenbart ein hydrostatisch-mechanisches Getriebe mit Leistungsverzweigung, welches zwei Schaltbereiche aufweist, und die stufenlose Regelung des Getriebes durch den hydrostatischen Leistungszweig erfolgt.

Die US 5 868 640 A offenbart ein Leistungsverzweigungsgetriebe nach dem Oberbegriff des Hauptanspruchs.

Der vorliegenden Erfindung liegt die Aufgabe zugrunde, ein Leistungsverzweigungsgetriebe mit mindestens zwei Fahrbereichen zu schaffen, wobei mindestens zwei Fahrbereiche in einer Vorwärtsfahrtrichtung und in einer Rückwärtsfahrtrichtung vorhanden sind und sich das Getriebe durch eine einfache Ansteuerung des hydrostatischen Leistungszweigs auszeichnet.

Die Aufgabe wird mit einem, auch die kennzeichnenden Merkmale des Hauptanspruchs aufweisenden, gattungsgemäßen Leistungsverzweigungsgetriebe gelöst.

Das Leistungsverzweigungsgetriebe weist einen hydrostatischen Leistungszweig und einen mechanischen Leistungszweig auf, welche in einem

Summierungsgetriebe aufsummiert werden. Im Kraftfluß ist dem Summierungsgetriebe ein Reversiergetriebe vorgeschaltet, mittels welchem sich die Drehrichtung der Getriebeeingangswelle, je nach gewünschter Fahrtrichtung, tung der Getriebeeingangswelle, je nach gewünschter Fahrtrichtung, reversieren läßt.

Vorzugsweise für die Verwendung des Leistungsverzweigungsgetriebes in einer Arbeitsmaschine, beispielsweise einem Radlader, ist das Summierungsgetriebe als Planetengetriebe ausgebildet, wobei das äußere Zentralrad des Planetengetriebes mit der Ausgangswelle des Reversiergetriebes in Wirkverbindung steht, das Sonnenrad des Planetengetriebes mit der ersten hydrostatischen Einheit in Wirkverbindung steht und der Planetenträger des Planetengetriebes mit einem nachgeschalteten Gangschaltgetriebe in Wirkverbindung steht. Das Gangschaltgetriebe ist dabei als Stirnradgetriebe ausgebildet, wodurch sich in dieser Kombination der für den Radlader benötigte Achsversatz herstellen läßt.

In einer Ausgestaltungsform der Erfindung ist beim Reversiergetriebe eine erste Kupplung für Vorwärtsfahrt koaxial zur Eingangswelle des Leistungsverzweigungsgetriebes angeordnet und das Planetengetriebe, das Gangschaltgetriebe und die Kupplung für Rückwärtsfahrt sind außerhalb der Eingangswelle des Leistungsverzweigungsgetriebes, d. h. nicht koaxial zu dieser, angeordnet. Die zweite hydrostatische Einheit steht in Wirkverbindung mit dem Planetenträger des Summierungsgetriebes, entweder direkt oder über eine Stirnradstufe, und ist vorzugsweise benachbart zur ersten hydrostatischen Einheit angeordnet. Die erste und die zweite hydrostatische Einheit weisen ein gemeinsames Bauteil auf, mittels welchem gleichzeitig das Hubvolumen der ersten und zweiten hydrostatischen Einheit verstellt werden kann, wobei die erste und die zweite hydrostatische Einheit als hydrostatische Einheiten in Schrägachsenbauweise ausgeführt sind. Die Hubvolumina der ersten und zweiten hydrostatischen Einheit sind so ausgeführt, dass in der ersten Betriebsweise des Leistungsverzweigungsgetriebes bei drehender Antriebswelle und stehender Abtriebswelle das gemeinsame Bauteil die erste und die zweite hydrostatische Einheit so verstellt, dass die erste hydrostatische Einheit, welche mit dem Sonnenrad in Wirkverbindung steht, auf kein Hubvolumen verstellt ist, und die zweite hydrostatische Einheit, welche mittelbar mit dem Planetenträger in Wirkverbindung steht, auf ihr maximales Hubvolumen verstellt ist. In einer zweiten Betriebsweise des Leistungsverzweigungsgetriebes bei maximal möglicher Drehzahl des Abtriebs ist das Hubvolumen der ersten hydrostatischen Einheit auf ihr maximales Hubvolumen verstellt, und das Hubvolumen der zweiten hydrostatischen Einheit auf kein Hubvolumen verstellt, wodurch die gesamte Leistung rein mechanisch übertragen wird. Soll im Schaltgetriebe von einem ersten Gang auf einen zweiten Gang umgeschaltet werden, so werden die beiden Gangkupplungen im Schließsinne betätigt, wobei mindestens eine dieser Gangkupplungen so lange in einem Schlupfbetrieb gehalten wird, bis die Last von der einen Gangkupplung auf die andere Gangkupplung übergegangen ist, wobei während diesem Übergang die Übersetzung, d. h. das Hubvolumen, von der ersten hydrostatischen Einheit und der zweiten hydrostatischen Einheit über das gemeinsame Bauteil um den Stufensprung zwischen dem ersten und dem zweiten Gang verringert wird. Durch diese Vorgehensweise bei der Bereichsschaltung kann das Leistungsverzweigungsgetriebe ohne Zugkraftunterbrechung geschaltet werden.

Weitere Merkmale sind der Figuren-Beschreibung zu entnehmen.

Es zeigen:
- Fig. 1: ein Getriebeschema eines Leistungsverzweigungsgetriebes mit koaxial zur Antriebswelle angeordneter Arbeitspumpe und

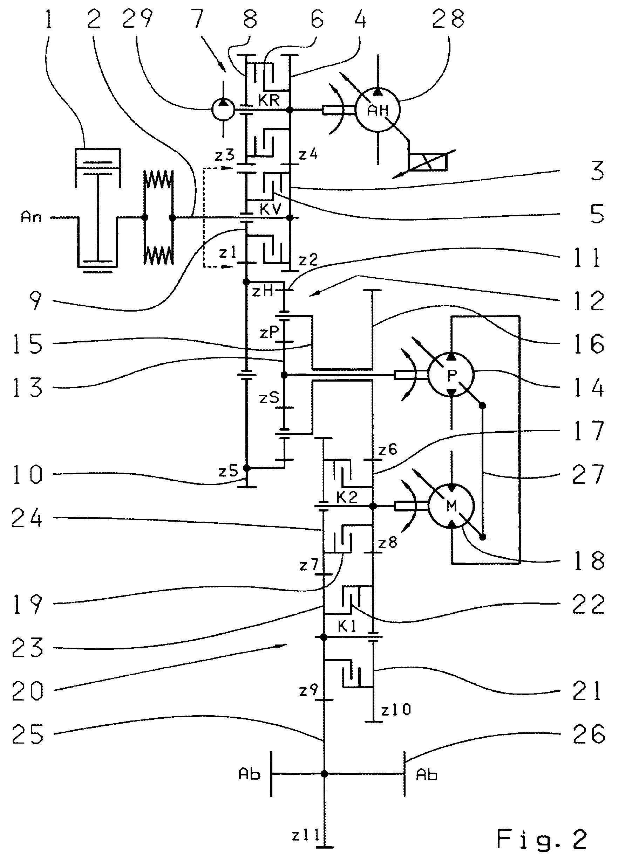

- Fig. 2: ein Leistungsverzweigungsgetriebe mit nicht koaxial zur Eingangswelle angeordneter Arbeitspumpe.

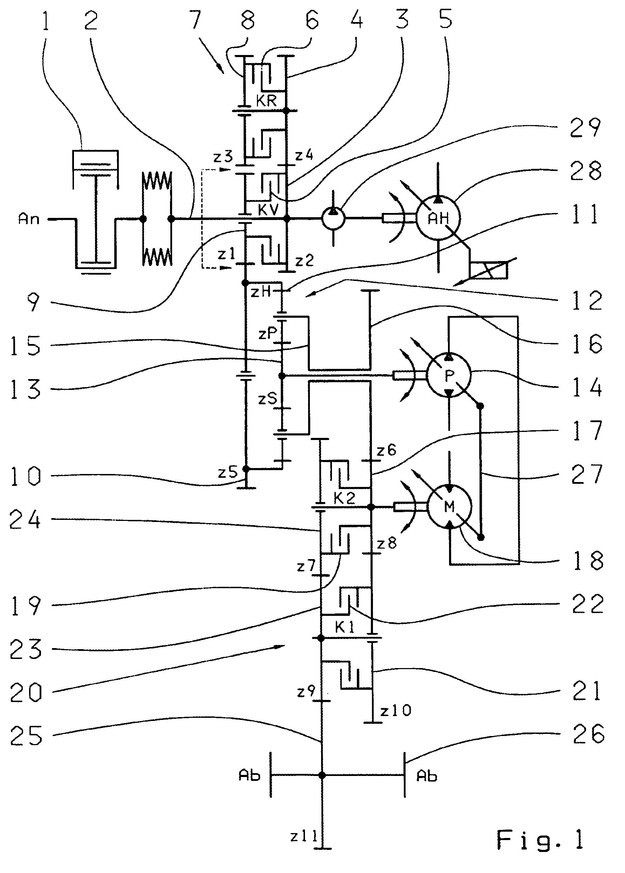

Fig. 1:
   Eine Antriebsmaschine 1 treibt die Eingangswelle 2 des Leistungsverzweigungsgetriebes an. Die Eingangswelle 2 ist drehfest mit dem Stirnrad 3 verbunden. Das Stirnrad 3 steht in Wirkverbindung mit dem Stirnrad 4, wobei die Kupplung für Vorwärtsfahrt 5 und die Kupplung für Rückwärtsfahrt 6 und das Stirnrad 3 und das Stirnrad 4 die Reversiereinheit 7 bilden. Das über die Kupplung für Rückwärtsfahrt 6 mit dem Stirnrad 4 verbindbare Stirnrad 8 und das über die Kupplung für Vorwärtsfahrt 5 mit dem Stirnrad 3 verbindbare Stirnrad 9 stehen in Wirkverbindung mit dem Stirnrad 10. Das Stirnrad 10 ist drehfest mit dem äußeren Zentralrad 11 des Planetengetriebes 12 verbunden. Das Planetengetriebe 12 bildet das Summierungsgetriebe für den mechanischen Leistungszweig und den hydrostatischen Leistungszweig. Das innere Zentralrad 13 des Planetengetriebes 12 ist drehfest mit der ersten hydrostatischen Einheit 14 verbunden. Der Planetenträger 15 ist drehfest mit dem Stirnrad 16 verbunden. Das Stirnrad 16 steht in Wirkverbindung mit dem Stirnrad 17, wobei das Stirnrad 17 drehfest mit der zweiten hydrostatischen Einheit 18 und der Gangkupplung 19 für den zweiten Gang des Untersetzungsgetriebes 20 verbunden ist. Das Stirnrad 17 steht in Wirkverbindung mit dem Stirnrad 21, welches über die Gangkupplung 22 mit dem Stirnrad 23 verbindbar ist. Das Stirnrad 17 ist über die Gangkupplung 19 mit dem Stirnrad 24 verbindbar. Das Stirnrad 24 steht in Wirkverbindung mit dem Stirnrad 23. Das Stirnrad 23 treibt das Stirnrad 25 und dieses den Abtrieb 26 an. Die erste hydrostatische Einheit 14 und die zweite hydrostatische Einheit 18 sind als hydrostatische Einheiten in Schrägachsenbauweise ausgebildet, wobei die Hubvolumina über ein gemeinsames Bauteil 27 verstellbar und die hydrostatischen Einheiten 14 und 18 benachbart zueinander angeordnet sind. Eine Arbeitspumpe 28 sowie eine Speise- und Schmierdruckpumpe 29 sind koaxial zur Eingangswelle 2 angeordnet. Zum Anfahren in einer Vorwärtsfahrtrichtung bei drehender Eingangswelle 2 ist die Kupplung für Vorwärtsfahrt 5 geschlossen, die Kupplung für Rückwärtsfahrt 6 geöffnet, die Gangkupplung 19 geöffnet und die Gangkupplung 22 geschlossen. Die erste hydrostatische Einheit 14 ist auf kein Hubvolumen und die zweite hydrostatische Einheit 18 ist auf ihr maximales Hubvolumen verstellt. In dieser Situation steht der Abtrieb 26 still. Wird nun das gemeinsame Bauteil 27 verstellt, so wird die erste hydrostatische Einheit 14 aus ihrem Hubvolumen Null verstellt und fördert Druckmittel zur zweiten hydrostatischen Einheit 18, welche mit der ersten hydrostatischen Einheit 14 im geschlossenen Kreis verbunden ist. Der Abtrieb 26 beginnt zu drehen. Bei der maximalen Verstellmöglichkeit des gemeinsamen Bauteils 27 befindet sich die erste hydrostatische Einheit 14 auf ihrem maximalen Hubvolumen und die zweite hydrostatische Einheit 18 auf Hubvolumen Null. Hierbei wird die gesamte Leistung ausschließlich über den mechanischen Leistungszweig zum Abtrieb 26 übertragen. Soll der zweite Gang geschaltet werden, so wird die Gangkupplung 19 zur geschlossenen Gangkupplung 22 ebenfalls im Schließsinne betätigt, wobei entweder die Gangkupplung 19 oder die Gangkupplung 22 oder beide Gangkupplungen so lange in einem Schlupfbetrieb gehalten werden, bis das gemeinsame Bauteil 27, die erste hydrostatische Einheit 14 und die zweite hydrostatische Einheit 18 dermaßen verstellt sind, bis das Hubvolumen und somit die Drehzahl der hydrostatischen Einheiten 14 und 18 zur neuen Übersetzung passen. Anschließend wird die Gangkupplung 22 vollständig geöffnet und die Gangkupplung 19 vollständig geschlossen. Durch Verstellen des gemeinsamen Bauteils 27 kann nun der Antrieb in seiner Abtriebsdrehzahl weiter verändert werden.
Fig. 2:
   Diese unterscheidet sich von der Fig. 1 ausschließlich dadurch, dass die Arbeitspumpe 28 und die Speise- und Schmierpumpe 29 mit dem Stirnrad 4 in Antriebsverbindung steht, wodurch die Arbeitspumpe 28 und die Speise- und Schmierpumpe 29 in ihrem Hubvolumen kleiner ausgeführt werden können, da die Drehzahl des Stirnrades 4 größer ist als die Drehzahl des Stirnrades 3. Es besteht auch die Möglichkeit, nur die Arbeitspumpe 28 mit dem Stirnrad 4 und die Speisepumpe 29 mit der Eingangswelle 2 oder die Arbeitspumpe 28 mit der Eingangswelle 2 und die Speisepumpe 29 mit dem Stirnrad 4 zu verbinden.

### Bezugszeichen

- 1: Antriebsmaschine
- 2: Eingangswelle
- 3: Stirnrad
- 4: Stirnrad
- 5: Kupplung für Vorwärtsfahrt
- 6: Kupplung für Rückwärtsfahrt
- 7: Reversiereinheit
- 8: Stirnrad
- 9: Stirnrad
- 10: Stirnrad
- 11: äußeres Zentralrad
- 12: Planetengetriebe
- 13: inneres Zentralrad
- 14: erste hydrostatische Einheit
- 15: Planetenträger
- 16: Stirnrad
- 17: Stirnrad
- 18: zweite hydrostatische Einheit
- 19: Gangkupplung
- 20: Untersetzungsgetriebe
- 21: Stirnrad
- 22: Gangkupplung
- 23: Stirnrad
- 24: Stirnrad
- 25: Stirnrad
- 26: Abtrieb
- 27: gemeinsames Bauteil
- 28: Arbeitspumpe
- 29: Speisepumpe

## Patentansprüche

1. Leistungsverzweigungsgetriebe mit einem hydrostatischen Zweig und einem mechanischen Zweig, welche über ein Summierungsgetriebe (12) summiert werden, mit mindestens zwei Fahrbereichen in einer Vorwärtsfahrtrichtung und mindestens zwei Fahrbereichen in einer Rückwärtsfahrtrichtung, **dadurch gekennzeichnet, dass** der hydrostatische Zweig eine erste hydrostatische Einheit (14) und eine zweite hydrostatische Einheit (18) aufweist, deren Hubvolumina über ein gemeinsames Bauteil (27) verstellbar ist, wobei das gemeinsame Bauteil (27) mit der ersten und der zweiten hydrostatischen Einheit (14, 19) verbunden ist.

2. Leistungsverzweigungsgetriebe nach Anspruch 1, dadurch g e - **kennzeichnet**, dass das Summierungsgetriebe (12) aus einem Planetengetriebe besteht, dessen inneres Zentralrad (13) mit der ersten hydrostatischen Einheit (14) verbunden ist und dessen äußeres Zentralrad (11) von einer Antriebsmaschine (1) antreibbar ist, und die zweite hydrostatische Einheit (18) mit einem Planetenträger (15) in Wirkverbindung steht.

3. Leistungsverzweigungsgetriebe nach Anspruch 1, dadurch g e - **kennzeichnet**, dass im Kraftfluß zwischen einer Antriebsmaschine (1) und dem Summierungsgetriebe (12) ein Reversiergetriebe (7) angeordnet ist.

4. Leistungsverzweigungsgetriebe nach Anspruch 1, dadurch g e - **kennzeichnet**, dass zwischen dem Summierungsgetriebe (12) und einem Abtrieb (26) ein Gangschaltgetriebe (20) angeordnet ist.

5. Leistungsverzweigungsgetriebe nach Anspruch 4, dadurch g e - **kennzeichnet**, dass in einem ersten Gang ein Planetenträger (15) des Summierungsgetriebes (12) über eine erste Übersetzungsstufe des Gangschaltgetriebes (20) mit dem Abtrieb (26) verbindbar ist, und in einem zweiten Gang der Planetenträger (15) des Summierungsgetriebes (12) über eine zweite Untersetzungsstufe des Gangschaltgetriebes (20) mit dem Abtrieb (26) verbindbar ist.

6. Leistungsverzweigungsgetriebe nach Anspruch 1, dadurch **ge** - **kennzeichnet**, dass bei drehender Eingangswelle (2) und stehendem Abtrieb (26) die erste hydrostatische Einheit (14) auf kein Hubvolumen und die zweite hydrostatische Einheit (18) auf maximales Hubvolumen verstellt ist.

7. Leistungsverzweigungsgetriebe nach Anspruch 1, dadurch **ge** - **kennzeichnet**, dass bei drehender Eingangswelle (2) und maximal möglicher Drehzahl am Abtrieb (26) die erste hydrostatische Einheit (14) auf ihr maximales Hubvolumen und die zweite hydrostatische Einheit (18) auf kein Hubvolumen verstellt ist.

8. Leistungsverzweigungsgetriebe nach Anspruch 1, dadurch **ge** - **kennzeichnet**, dass eine hydraulische Arbeitspumpe (28) konzentrisch zur Eingangswelle (2) des Leistungsverzweigungsgetriebes angeordnet ist und mit der Eingangswelle (2) in Wirkverbindung steht.

9. Leistungsverzweigungsgetriebe nach Anspruch 1, dadurch **ge** - **kennzeichnet**, dass eine hydraulische Arbeitspumpe (28) konzentrisch zu einer Fahrtrichtungskupplung (6) des Leistungsverzweigungsgetriebes angeordnet ist und mit einem Antrieb (4) der Fahrtrichtungskupplung (6) in Wirkverbindung steht.

10. Leistungsverzweigungsgetriebe nach Anspruch 1, dadurch **ge** - **kennzeichnet**, dass eine Fahrtrichtungskupplung für Vorwärtsfahrt (5) konzentrisch zur Eingangswelle (2) angeordnet ist.

## Claims

1. Power split transmission having a hydrostatic branch and having a mechanical branch which are summed by means of a summing gearing (12), having at least two drive ranges in a forward travel direction and at least two drive ranges in a reverse travel direction, **characterized in that** the hydrostatic branch has a first hydrostatic unit (14) and a second hydrostatic unit (18) whose swept volumes can be adjusted by means of a common component (27), wherein the common component (27) is connected to the first and the second hydrostatic unit (14, 19).

2. Power split transmission according to Claim 1, **characterized in that** the summing gearing (12) is composed of a planetary gear set whose inner central gear (13) is connected to the first hydrostatic unit (14) and whose outer central gear (11) can be driven by a drive machine (1), and the second hydrostatic unit (18) is operatively connected to a planet carrier (15).

3. Power split transmission according to Claim 1, **characterized in that** a reversing gearing (7) is arranged in the power flow between a drive engine (1) and the summing gearing (12).

4. Power split transmission according to Claim 1, **characterized in that** a gearshift transmission (20) is arranged between the summing gearing (12) and a drive output (26).

5. Power split transmission according to Claim 4, **characterized in that**, in a first gear, a planet carrier (15) of the summing gearing (12) can be connected to the drive output (26) via a first step-up transmission ratio stage of the gearshift transmission (20), and in a second gear, the planet carrier (15) of the summing gearing (12) can be connected to the drive output (26) via a second step-down transmission ratio stage of the gearshift transmission (20).

6. Power split transmission according to Claim 1, **characterized in that**, when the input shaft (2) is rotating and the drive output (26) is static, the first hydrostatic unit (14) is adjusted to zero swept volume and the second hydrostatic unit (18) is adjusted to maximum swept volume.

7. Power split transmission according to Claim 1, **characterized in that**, when the input shaft (2) is rotating and the drive output (26) is at a maximum possible rotational speed, the first hydrostatic unit (14) is adjusted to its maximum swept volume and the second hydrostatic unit (18) is set to zero swept volume.

8. Power split transmission according to Claim 1, **characterized in that** a hydraulic working pump (28) is arranged concentrically with respect to the input shaft (2) of the power split transmission and is operatively connected to the input shaft (2).

9. Power split transmission according to Claim 1, **characterized in that** a hydraulic working pump (28) is arranged concentrically with respect to a driving direction clutch (6) of the power split transmission and is operatively connected to a drive input (4) of the driving direction clutch (6).

10. Power split transmission according to Claim 1, **characterized in that** a driving direction clutch for forward travel (5) is arranged concentrically with respect to the input shaft (2).

## Revendications

1. Transmission à répartition de puissance comprenant une branche hydrostatique et une branche mécanique, qui sont additionnées par le biais d'une transmission additive (12), comprenant au moins deux plages de conduite dans une direction de conduite vers l'avant et au moins deux plages de conduite dans une direction de conduite vers l'arrière, **caractérisée en ce que** la branche hydrostatique présente une première unité hydrostatique (14) et une deuxième unité hydrostatique (18), dont les cylindrées peuvent être réglées par un composant commun (27), le composant commun (27) étant connecté à la première et à la deuxième unité hydrostatique (14, 18).

2. Transmission à répartition de puissance selon la revendication 1, **caractérisée en ce que** la transmission additive (12) se compose d'une transmission planétaire dont le pignon central interne (13) est connecté à la première unité hydrostatique (14) et dont le pignon central externe (11) peut être entraîné par une machine motrice (1) et la deuxième unité hydrostatique (18) est en liaison fonctionnelle avec un porte-satellites (15).

3. Transmission à répartition de puissance selon la revendication 1, **caractérisée en ce que** dans le flux de forces entre une machine motrice (1) et la transmission additive (12) est disposé un engrenage inverseur (7).

4. Transmission à répartition de puissance selon la revendication 1, **caractérisée en ce qu'**entre la transmission additive (12) et une prise de force (26) est disposée une transmission à changement de vitesse (20).

5. Transmission à répartition de puissance selon la revendication 4, **caractérisée en ce que** dans une première vitesse, un porte-satellites (15) de la transmission additive (12) peut être connecté par le biais d'un premier étage de démultiplication de la transmission à changement de vitesse (20) à la prise de force (26), et dans une deuxième vitesse, le porte-satellites (15) de la transmission additive (12) peut être connecté par le biais d'un deuxième étage de démultiplication de la transmission à changement de vitesse (20) à la prise de force (26).

6. Transmission à répartition de puissance selon la revendication 1, **caractérisée en ce que** lorsque l'arbre d'entrée (2) tourne et que la prise de force (26) est stationnaire, la première unité hydrostatique (14) est réglée à une cylindrée nulle et la deuxième unité hydrostatique (18) est réglée à une cylindrée maximale.

7. Transmission à répartition de puissance selon la revendication 1, **caractérisée en ce que** lorsque l'arbre d'entrée (2) tourne et que la vitesse de rotation possible au niveau de la prise de force (26) est maximale, la première unité hydrostatique (14) est réglée à sa cylindrée maximale et la deuxième unité hydrostatique (18) est réglée à une cylindrée nulle.

8. Transmission à répartition de puissance selon la revendication 1, **caractérisée en ce qu'**une pompe de travail hydraulique (28) est disposée concentriquement à l'arbre d'entrée (2) de la transmission à répartition de puissance et est en liaison fonctionnelle avec l'arbre d'entrée (2).

9. Transmission à répartition de puissance selon la revendication 1, **caractérisée en ce qu'**une pompe de travail hydraulique (28) est disposée concentriquement à un embrayage à direction de conduite (6) de la transmission à répartition de puissance et est en liaison fonctionnelle avec un entraînement (4) de l'embrayage à direction de conduite (6).

10. Transmission à répartition de puissance selon la revendication 1, **caractérisée en ce qu'**un embrayage à direction de conduite pour la conduite en marche avant (5) est disposé concentriquement à l'arbre d'entrée (2).
